# DEMANDE DE BREVET EUROPEEN

(11) **EP 1 998 030 A1**
(43) Date de publication de la demande: **03.12.2008**
(21) Numéro de dépôt: 08300191.7
(22) Date de dépôt: 24.04.2008
(51) Int. Cl.: F02D 13/02, F02D 13/06, F02D 41/12, F02D 41/00

(54) **Système de déconnexion des soupapes d'admission d'un moteur à combustion interne et fonctionnement de ce système**

(30) Priorité: 01.06.2007 FR 0703917
(71) Demandeur: Renault S.A.S., 92100 Boulogne-Billancourt (FR)
(72) Inventeur: Valenciennes, Edouard, 75015 Paris (FR)

(57) **Abrégé**

La présente invention concerne un système de déconnexion d'au moins une soupape d'admission (10) d'un moteur à combustion interne caractérisé en que la soupape d'admission (10) est de façon à ce que la tête de la soupape d'admission (10) soit en position d'obturation du conduit d'admission (1) lors des cycles de fonctîorinemerit du moteur à combustion interne en même temps que le système d'injection (5) assure une coupure d'injection de carburant dans la chambre de combustion (3). Ce système de déconnexion de soupapes d'admission (10) d'un moteur à combustion interne permet d'assurer l'efficacité du système catalytique pour le traitements des oxydes d'azotes (NOₓ) durant les cycles de fonctionnement du moteur à combustion interne en même temps que le système d'injection (5) assure une coupure d'injection de carburant dans la chambre de combustion (3).

## Description

La présente invention concerne le domaine du contrôle moteur, de la mise au point des moteurs à allumage commandé et du contrôle de la dépollution pour les véhicules automobiles, et propose en particulier un système de déconnexion des soupapes d'admission d'un moteur à combustion interne et un fonctionnement de ce système.

Afin d'éliminer les principaux polluants, divers dispositifs de post-traitement catalytique des gaz d'échappement ont été mis au point. Dans leur principe, ces dispositifs permettent des réactions chimiques d'oxydation ou de réduction pour transformer les polluants en eau, azote et dioxyde de carbone. Le "catalyseur trois voies" est aujourd'hui le type de catalyseur le plus répandu pour les moteurs à combustion interne de type essence. Grâce à ce dispositif, le monoxyde de carbone noté CO et les hydrocarbures imbrûlés notés HC sont oxydés et les oxydes d'azote notés NOₓ sont réduits. Or, les réactions d'oxydation demandent une forte présence d'oxygène et les réactions de réduction demandent une faible présence d'oxygène. Ainsi, les réactions de réduction et d'oxydation ne se produisent simultanément que si la quantité d'air dans le carburant est optimale. Le catalyseur trois voies doit donc fonctionner avec une quantité précise d'air ou d'oxygène nécessaire à une combustion optimale du carburant admis.

Mais, lors de coupures d'injection de carburant, par exemple, lors de la décélération ou encore lors du changement de rapport, l'efficacité de traitement des oxydes d'azote (NOₓ) par le système catalytique est dégradée puisque ce dernier est chargé en oxygène.

Actuellement, pour résoudre ce problème de dégradation de l'efficacité du système catalytique pour le traitement des oxydes d'azote lors des coupures d'injection de carburant dans la chambre de combustion, il existe des moteurs non munis de déconnexion de soupapes et des moteurs équipés de déconnexion de soupapes à l'échappement.

Pour les non munis de de soupapes, il est nécessaire d'effectuer un réglage de la boucle de régulation de la richesse du mélange air/carburant, lors des coupures d'injection de carburant, de façon à ce que le moteur à combustion interne en mélange riche, c'est à dire beaucoup de carburant et peu d'oxygène, afin de purger l'oxygène stocké.

Pour les moteurs équipés de déconnexion de soupapes à l'échappement, il est nécessaire de déconnecter les soupapes à l'échappement lors des phases de coupures d'injection de carburant afin d'éviter d'envoyer une quantité trop importante d'oxygène dans le système catalytique. Le réglage de la boucle de régulation de la richesse de fonctionnement du moteur à combustion interne peut également être applicable pour de tels moteurs.

Le document EP 1 178 201 est sur le principe de déconnexion des soupapes à l'échappement pour permettre de maintenir une bonne efficacité du système catalytique vis-à-vis du traitement des oxydes d'azote (NOₓ). Il propose un moteur à combustion interne qui Inclut un dispositif de contrôle du moteur ayant connaissance d'une condition déterminée de décélération pour un véhicule automobile et une chambre de combustion avec un piston. La soupape d'échappement commandée par une came peut être de manière sélective en position fermée pour désamorcer la chambre de combustion en réponse à un signal donné par le dispositif de contrôle du moteur durant la décélération du véhicule automobile correspondant à un cycle de fonctionnement du moteur avec une phase de coupure d'injection,

Mais, le réglage de la boucle de régulation de la richesse de fonctionnement du moteur à combustion interne nécessite un fonctionnement du moteur à combustion interne en mélange riche pendant un certain temps entraînant une surconsommation en carburant. Par ailleurs, les zones dans lesquelles le moteur à combustion interne fonctionne nécessairement en mélange riche et les durées de ces fonctionnements ne sont pas faciles à déterminer de façon robuste. Enfin, lors de coupures d'injections de carburant, l'air du flux d'admission est transvasé à l'échappement sans être brulé dans la chambre de combustion. Cet air ou oxygène reste en l'état de gaz froid ce qui contribue à diminuer la température du système catalytique que l'oxygène traverse et ainsi, entraîne une diminution encore plus importante de l'efficacité du système catalytique.

La présente invention a pour but de pallier ces inconvénients de l'art antérieur en proposant un système de déconnexion des soupapes d'admission d'un moteur à combustion interne permettant d'assurer l'efficacité du système catalytique pour le traitement des oxydes d'azote (NOₓ) lors des phases de coupures d'injection de carburant dans la chambre de combustion.

Pour atteindre ce but, le système de déconnexion d'au moins une soupape d'admission d'un moteur à combustion interne comprenant un conduit d'admission dans lequel se déplace un flux d'air selon une direction parallèle à de symétrie du conduit d'admission, le conduit d'admission étant associé à la soupape et se terminant dans une de combustion dans est injecté un carburant via un système d'injection, le mélange air/carburant étant compressé et détendu par un mouvement rectiligne d'un piston, le mouvement rectiligne s'effectuant selon une direction parallèle à l'axe de symétrie de la de combustion, le mélange air/carburant une fois détendu étant chassé un conduit d'échappement et vers un système catalytique, le conduit d'échappement étant associé à une soupape d'échappement est caractérisé en ce que la soupape d'admission est de façon à ce que la tête de la soupape d'admission soit en position d'obturation du conduit d'admission lors des cycles de fonctionnement du moteur à combustion interne en même temps qu'un système de contrôle électronique d'injection assure une coupure d'injection de carburant dans la chambre de combustion.

La présente invention a également pour objet de proposer une utilisation du système sur un véhicule automobile dont la dépression de freinage est obtenue à partir de la pression d'admission.

Ce but est atteint par le fait que le système comporte un système de contrôle de la dépression d'admission par le système d'assistance au freinage du véhicule automobile pour fournir la dépression nécessaire au freinage assuré.

Selon une autre particularité, le système est applicable sur des moteurs à combustion interne du type à allumage commandé,

Un autre but est atteint en proposant un fonctionnement d'un moteur à combustion interne muni du système de déconnexion de soupapes d'admission, caractérisé en ce que le système permet d'assurer l'efficacité du système catalytique vis-à-vis des traitements des oxydes d'azote lors des phases de coupures d'injections de carburant dans la chambre de combustion en empêchant l'ouverture du conduit d'admission dans la chambre de combustion lors des phases de coupures d'injections.

Selon une autre particularité, le fonctionnement d'un moteur à combustion interne muni du système de déconnexion de soupapes d'admission, durant les phases de coupures d'injection de carburant dans la chambre de combustion s'effectue selon le cycle suivant:
- une phase de début d'échappement correspondant à l'ouverture progressive de la soupape d'échappement et à la remontée du piston qui chasse les gaz brûlés dans le conduit d'échappement et vers le système catalytique en vue de leurs traitements ;
- une phase de fin d'échappement correspondant à la fermeture progressive de la soupape d'échappement et à la remontée du piston qui chasse les gaz brûlés dans le conduit d'échappement et vers le système catalytique en vue de leurs traitements, laissant la place à un nouveau cycle de fonctionnement du moteur à combustion interne ;
et est en que le de fonctionnement comprend également:
- une phase d'admission, correspondant à la de la soupape d'admission de façon à ce qu'elle soit en position dite d'obturation du conduit d'admission empêchant ainsi l'admission de gaz frais dans la chambre de combustion et à la descente du piston, la soupape d'échappement étant en position d'obturation du conduit d'échappement;
- une phase de compression pendant la coupure de l'injection du carburant dans la chambre de combustion correspondant à la remontée du piston qui comprime les gaz présents dans la chambre de combustion, la soupape d'échappement étant en position d'obturation du conduit d'échappement et la soupape d'admission étant déconnectée ;
- une phase de détente pendant la coupure de l'injection du carburant dans la chambre de combustion correspondant à la descente du piston vers sa position minimale ou de point mort bas, la soupape d'échappement étant en position d'obturation du conduit d'échappement et la soupape d'admission étant déconnectée, la combustion n'ayant pas eu lieu puisqu'il n'y a pas eu d'injection de carburant dans la chambre de combustion ;
- une phase de début d'échappement correspondant à l'ouverture progressive de la soupape d'échappement et à la remontée du piston qui chasse les gaz présents dans la chambre de combustion par le conduit d'échappement et vers le système catalytique en vue de leurs traitements, laissant la place à un nouveau de fonctionnement du moteur à combustion interne.

L'invention sera mieux comprise et d'autres buts, caractéristiques, détails et avantages de celle-ci apparaîtront plus clairement au cours de la description explicative qui va suivre faite en référence aux figures annexées données à titre d'exemples non limitatifs dans lesquelles :

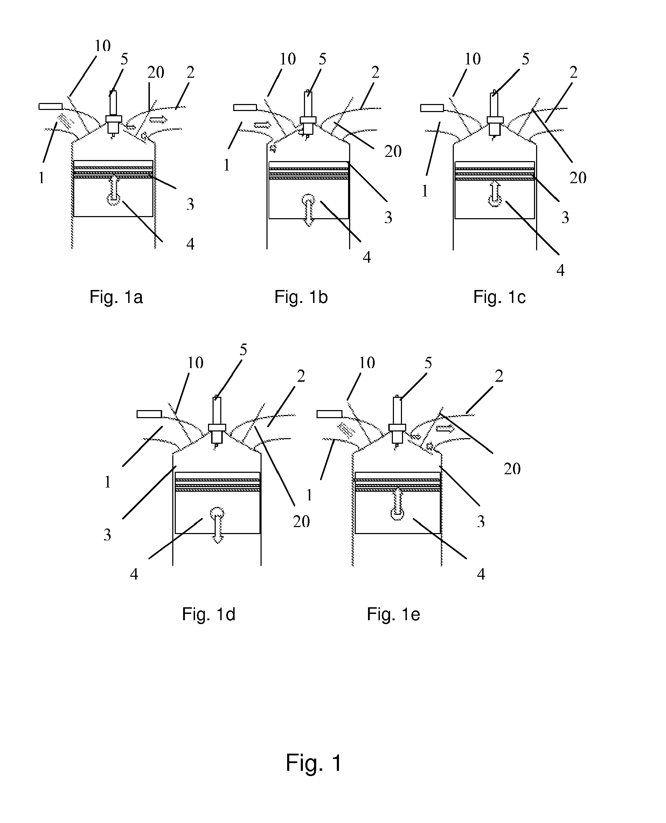

- la figure 1 illustre un cycle de fonctionnement nominal d'un moteur à combustion interne muni d'un système de déconnexion de soupapes d'admission: la figure 1a représente la phase d'échappement d'un premier mélange air/carburant, la figure 1b représente la phase d'admission du flux d'admission, la figure 1c représente la phase de compression d'un second mélange air/carburant, la figure 1d représente la phase de détente du second mélange air/carburant, la figure 1e représente la phase d'échappement du second mélange air/carburant ;

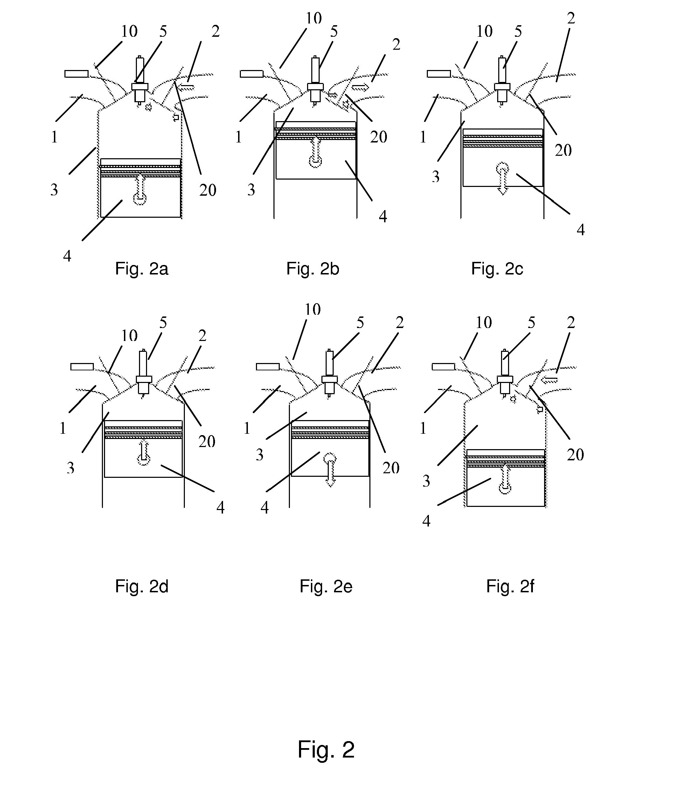

- la figure 2 illustre un cycle de fonctionnement, avec coupure d'injection de carburant, d'un moteur à combustion interne muni du système de déconnexion de soupapes d'admission: la figure 2a représente la phase de début d'échappement, la figure 2b représente la phase de fin d'échappement, la figure 2c représente la phase d'admission, la figure 2d représente la phase de compression, la figure 2e représente la phase de détente, la figure 2f représente la phase d'échappement ;

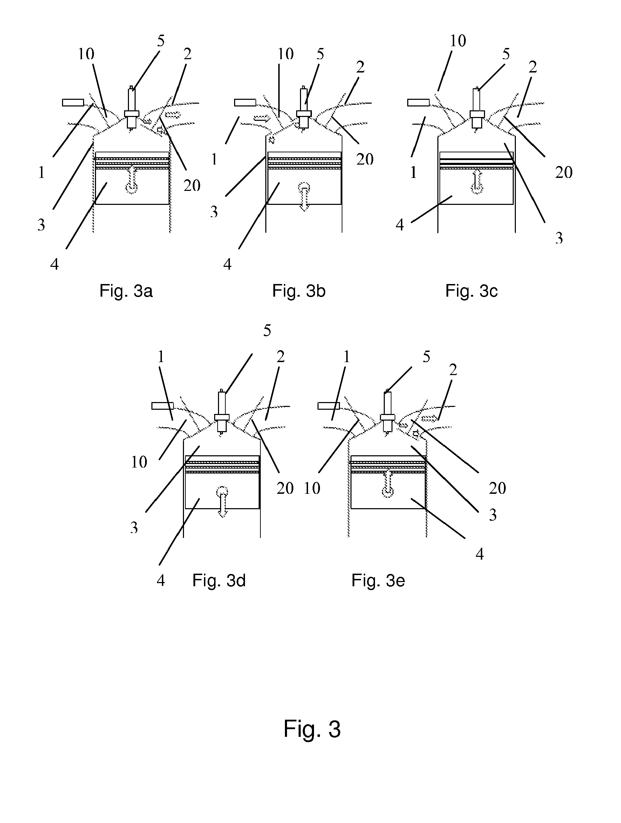

- la figure 3 illustre un cycle de fonctionnement, avec coupure d'injection de carburant, d'un moteur à combustion interne non muni du système de déconnexion de soupapes d'admission: la figure 3a représente la phase d'échappement, la figure 3b représente la phase d'admission, la figure 3c représente la phase de compression, la figure 3d représente la phase de détente, la figure 3e représente la phase d'échappement.

Le système de déconnexion d'au moins une soupape d'admission (10) d'un moteur à combustion interne permet d'assurer l'efficacité d'un système catalytique pour le traitement des oxydes d'azote (NOx) lors des phases de coupures d'injection de carburant dans une chambre de combustion (3) du moteur. Les coupures d'injections de carburant se produisent par exemple, lors des décélérations du véhicule automobile ou bien encore lors des changements de rapport du moteur et permettent d'éviter une surconsommation de carburant.

Le moteur à combustion interne, muni du système de déconnexion d'au moins une soupape d'admission (10), comprend un conduit d'admission (1) dans lequel se déplace un flux d'admission, comprenant de l'oxygène et correspondant à un gaz frais, selon une direction parallèle à l'axe de symétrie du conduit d'admission (1). La soupape d'admission (10) associée au conduit d'admission (1) peut être en position de ou d'ouverture et permet ainsi à ce flux d'admission d'entrer ou non dans la chambre de combustion (3). Au sommet de cette chambre de combustion (3) est disposé un système d'injection (5), composé d'au moins un injecteur qui permet d'injecter la quantité de carburant, dans la chambre de combustion (3), nécessaire au fonctionnement du moteur à combustion interne. Cette chambre de combustion (3) comporte un piston (4) qui par un mouvement rectiligne dans une direction parallèle à l'axe de symétrie de la chambre de combustion (3) permet la compression et la détente du mélange ou du gaz présent dans la chambre de combustion (3) lorsque la soupape d'admission (10) et une soupape d'échappement (20) obturent respectivement le conduit d'admission (1) et un conduit d'échappement (2), le mouvement rectiligne du piston (4) s'effectuant d'une position maximale dite position de point mort haut à une position minimale dite position de point mort bas. Après la phase de détente, les gaz sont chassés dans le conduit d'échappement (2), dès lors que la soupape d'échappement (20) est en position d'ouverture du conduit d'échappement (2). Ces gaz sont chassés vers un système catalytique, disposé sur la ligne d'échappement du moteur à combustion interne, le système catalytique assurant le traitement des polluants (monoxyde de carbone (CO), hydrocarbures imbrûlés (HC) et oxydes d'azote (NOₓ)), des gaz d'échappement. Le système catalytique correspond soit à un catalyseur trois voies pour les moteurs à combustion interne de type essence ou soit à un catalyseur deux voies associé à un filtre à particule pour les moteurs à combustion de type diesel,

Lors d'un cycle de fonctionnement, avec coupure d'injection de carburant dans la chambre de combustion (3), du moteur à combustion interne, les soupapes d'admission (10) sont déconnectées de façon à ce qu'elles prennent une position dite d'obturation du conduit d'admission (1) empêchant ainsi l'admission de gaz frais dans la chambre de combustion (3).

Le système de déconnexion d'au moins une soupape d'admission (10) comprend ainsi un système de contrôle électronique de commander la déconnexion des soupapes d'admission (10) et l'injection de carburant dans la chambre de combustion (3) via le système d'injection (5).

En outre, le système de déconnexion d'au moins une soupape d'admission (10) comprend un système de contrôle de dépression du système d'assistance freinage lorsque le freinage est généré dans le répartiteur d'admission. En effet, la dépression du système d'assistance freinage est actuellement assurée soit par un répartiteur d'admission, soit par une pompe, Dans le cas où cette dépression du système d'assistance freinage est assurée par une pompe, la dépression de freinage est indépendante de la dépression du répartiteur d'admission et donc, la déconnexion des soupapes d'admission (10) n'est plus conditionnée à la dépression du système d'assistance freinage, Mais, dans le cas où la dépression du système d'assistance freinage est assurée par le répartiteur d'admission, il est nécessaire que cette dépression du système d'assistance freinage soit suffisante pour garantir une bonne qualité de freinage. Cette dépression suivant les systèmes d'assistance freinage, peut être soit estimée par une modélisation du système d'assistance freinage, soit mesurée par un capteur de pression. Lorsque les soupapes d'admission (10) sont déconnectées, il n'y a plus de pompage des gaz présents à l'admission. La pression à l'admission s'en trouve sensiblement augmentée en se rapprochant de la pression atmosphérique et la dépression du système d'assistance freinage n'est plus suffisante pour garantir une bonne qualité de freinage.

Il est à noter que le système de déconnexion d'au moins une soupape d'admission (10) est applicable sur des moteurs à combustion interne du type à allumage commandé,

En référence à la figure 1, on décrira ci-après un cycle de fonctionnement nominal d'un moteur à combustion interne muni d'un système de déconnexion de soupapes (10).

Lorsque qu'il n'y pas de coupures d'injection de carburant dans la chambre de combustion (3), le moteur à combustion interne muni du système de déconnexion de soupapes d'admission (10) fonctionne selon le cycle suivant:
- une phase d'échappement, comme le montre la figure 1a, correspondant à l'ouverture de la soupape d'échappement (20) et à la remontée du piston (4) qui chasse les gaz brûlés dans le conduit d'échappement (2) et vers le système catalytique en vue de leurs traitements, laissant la place à un nouveau cycle de fonctionnement décrit ci-dessous, du moteur à combustion interne ;
- une phase d'admission, comme le montre la figure 1b, correspondant à l'ouverture de la soupape d'admission (10) et à la descente du piston (4) qui pompe le flux d'air frais issu du conduit d'admission (1), la soupape d'échappement (20) étant en position d'obturation du conduit d'échappement (2) ;
- une phase de compression, comme le montre la figure 1c, correspondant à la fermeture de la soupape d'admission (10), à l'injection de carburant dans la chambre de combustion (3) via le système d'injection (5) et à la remontée du piston (4) qui comprime le mélange air/carburant, la soupape d'échappement (20) étant en position d'obturation du conduit d'échappement (2);
- une phase de détente, comme le montre la figure 1d, correspondant à la combustion du mélange air/carburant lorsque le piston (4) atteint sa position maximale ou de point mort haut, le mélange air/carburant ainsi brûlés encore appelé gaz brûlés repousse le piston (4) vers sa position minimale ou de point mort bas ;
- une phase d'échappement comme le montre la figure 1e, correspondant à l'ouverture de la soupape d'échappement (20) et à la remontée du piston (4) qui chasse les gaz brûlés dans le conduit d'échappement (2) et vers le système catalytique en vue de leurs traitements, laissant la place à un nouveau cycle de fonctionnement du moteur à combustion interne.

En référence à la figure 2, on décrira ci-aprés le cycle de fonctionnement, avec coupure d'injection de carburant dans une chambre de combustion (3), d'un moteur à combustion interne muni du système de déconnexion de soupapes d'admission (10). Il est à noter que les injections faites via le système d'injection (5) peuvent être coupées indépendamment cylindre par cylindre.

Durant les phases de coupures d'injection de carburant dans la chambre de combustion (3), le moteur à combustion interne muni du système de déconnexion de soupapes d'admission (10) fonctionne selon le cycle suivant:
- une phase de début d'échappement, comme le montre la figure 2a, correspondant à l'ouverture progressive de la soupape d'échappement (20) et à la remontée du piston (4) qui chasse les gaz brûlés dans le conduit d'échappement (2) et vers le système catalytique en vue de leurs traitements ;
- une phase de fin d'échappement, comme le montre la figure 2b, correspondant à la fermeture progressive de la soupape d'échappement (20) et à la remontée du piston (4) qui chasse les gaz brûlés dans le conduit d'échappement (2) et vers le système catalytique en vue de leurs traitements, laissant la place à un nouveau cycle de fonctionnement, décrit ci-dessous, du moteur à combustion interne ;
- une phase d'admission, comme le montre la figure 2c, correspondant à la déconnexion de la soupape d'admission (10) de façon à ce qu'elle soit en position dite d'obturation du conduit d'admission (1) empêchant ainsi l'admission de gaz frais dans la chambre de combustion (3), et à la descente du piston (4), la soupape d'échappement (20) étant en position d'obturation du conduit d'échappement (2) ;
- une de compression, comme le montre la figure 2d, pendant la coupure de l'injection du carburant dans la chambre de combustion (3) correspondant à la remontée du piston (4) qui comprime les gaz présents dans la de combustion (3), la soupape d'échappement (20) étant en position d'obturation du conduit d'échappement (2) et la soupape d'admission (10) étant déconnectée ;
- une phase de détente, comme le montre la figure 2e, pendant la coupure de l'injection du carburant dans la chambre de combustion (3), correspondant à la descente du piston (4) vers sa position minimale ou de point mort bas, la soupape d'échappement (20) étant en position d'obturation du conduit d'échappement (2) et la soupape d'admission (10) étant déconnectée, la combustion n'ayant pas eu lieu puisqu'il n'y a pas eu d'injection de carburant dans la chambre de combustion (3) ;
- une phase de début d'échappement comme le montre la figure 2f, correspondant à l'ouverture progressive de la soupape d'échappement (20) et à la remontée du piston (4) qui chasse les gaz présents dans la chambre de combustion (3) par le conduit d'échappement (2) et vers le système catalytique en vue de leurs traitements, laissant la place à un nouveau cycle de fonctionnement du moteur à combustion interne.

Du fait de la masse réduite de gaz présents dans la chambre de combustion (3) tout au long de ce cycle de fonctionnement, le système catalytique ne reçoit donc pas d'excès d'oxygène et l'efficacité de traitement des oxydes d'azote (NOₓ) est assurée. Par ailleurs, ce système de déconnexion de soupapes d'admission (10) présente des avantages autres que la dépollution mais également la génération d'aérodynamique dans la chambre de combustion (3). La phase de compression est réalisée avec une masse de gaz réduite ce qui permet la réduction des acyclismes et les vibrations associés à ces acyclismes, les acyclismes étant la variation de régime des différents cylindres provoqués par les écarts de débits d'injection et de taux de remplissage des cylindres.

En référence à la figure 3, on décrira ci-aprés le cycle de fonctionnement, avec coupure d'injection de carburant dans la de combustion (3), d'un moteur à combustion interne non muni du système de déconnexion de soupapes d'admission (10).

Lors de coupures d'injection en carburant dans la chambre de combustion (3), le moteur à combustion interne non muni du système de déconnexion de soupapes d'admission (10) fonctionne selon le cycle suivant:
- une phase d'échappement, comme le montre la figure 3a, correspondant à l'ouverture de la soupape d'échappement (20) et à la remontée du piston (4) qui chasse les gaz brûlés dans le conduit d'échappement (2) et vers le système catalytique en vue de leurs traitements, laissant la place à un nouveau cycle de fonctionnement, décrit ci-dessous, du moteur à combustion interne ;
- une phase d'admission, comme le montre la figure 3b, correspondant à l'ouverture de la soupape d'admission (10) et à la descente du piston (4) qui pompe le flux d'air frais issu du conduit d'admission (1), la soupape d'échappement (20) en position du conduit d'échappement (2) ;
- une de compression pendant la coupure de du carburant dans la de combustion (3), comme le montre la figure 3c, correspondant à la de la soupape (10) et à la remontée du piston (4) qui comprime le gaz frais, la soupape d'échappement (20) étant en position d'obturation du conduit d'échappement (2) ;
- une phase de détente pendant la coupure de l'injection du carburant dans la chambre de combustion (3), comme le montre la figure 3d, correspondant à la descente du piston (4) sa position ou de point mort bas, la combustion n'ayant pas eu lieu puisqu'il n'y a pas eu d'injection de carburant dans la chambre de combustion (3) ;
- une phase d'échappement comme le montre la figure 1e, correspondant à de la soupape d'échappement (20) et à la remontée du piston (4) qui chasse les gaz présents ta de combustion (3) par le conduit d'échappement (2) et vers le système en vue de leurs traitements, laissant la place à un nouveau cycle de fonctionnement du moteur à combustion interne,

Du fait de l'absence de carburant dans la chambre de combustion (3), la combustion n'a pas lieu et les gaz frais admis sont transvasés à l'échappement entraînant une de la température du système et ainsi, contribuant à diminuer l'efficacité de ce système catalytique.

Un des avantages de l'invention est que le système de déconnexion de soupapes d'admission (10) d'un moteur à combustion interne permet d'assurer l'efficacité du système catalytique pour le traitement des oxydes d'azotes (NO_{X}) durant les cycles de fonctionnement, du moteur à combustion interne, avec coupures d'injection du carburant dans la chambre de combustion (3).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine par la portée des revendications jointes, et l'invention ne doit pas être limitée aux détails donnés ci-dessus.

## Revendications

1. de déconnexion d'au moins une soupape (10) d'un moteur à combustion interne un conduit d'admission (1) dans lequel se déplace un flux d'air selon une direction parallèle à l'axe de symétrie du conduit (1), le conduit d'admission (1) étant associé à la soupape d'admission (10) et se terminant dans une chambre de combustion (3) dans est injecté un carburant via un système (5), le mélange aîr/carburant étant et par un mouvement d'un piston (4), le mouvement rectiligne s'effectuant selon une direction parallèle à l'axe de symétrie de la chambre de combustion (3), le mélange air/carburant une fois détendu étant chasse un conduit d'échappement (2) et un système catalytique, le conduit d'échappement (2) étant associé à une soupape d'échappement (20) **caractérisé en ce que** la soupape d'admission (10) est déconnectée de façon à ce que la tête de la soupape d'admission (10) soit en position d'obturation du conduit d'admission (1) lors des cycles de fonctionnement du moteur à combustion interne en même temps qu'un système de contrôle électronique d'injection (5) assure une coupure d'injection de carburant dans la chambre de combustion (3).

2. Utilisation du système de déconnexion d'au moins une soupape d'admission (10) sur un véhicule automobile dont la dépression de freinage est obtenue à de la pression d'admission selon la revendication 1, **caractérisé en ce que** le système de déconnexion comporte un système de contrôle de la dépression d'admission par le système d'assistance au freinage du véhicule automobile pour fournir la dépression nécessaire au freinage assuré.

3. Utilisation du système de déconnexion d'au moins une soupape d'admission (10) selon la revendication 2, dans lequel le système est applicable sur des moteurs à combustion interne du type à allumage commandé.

4. Fonctionnement d'un moteur à combustion interne muni du système de déconnexion de soupapes d'admission (10) selon la revendication 1, **caractérisé en ce que** le système permet d'assurer l'efficacité du système catalytique vis-à-vis des traitements des oxydes d'azote lors des phases de coupures d'injections de carburant dans la chambre de combustion (3) en empêchant l'ouverture du conduit d'admission (1) dans la chambre de combustion (3) lors des de coupures d'injections.

5. Fonctionnement selon la revendication 4, d'un moteur à combustion interne muni du système de déconnexion de soupapes d'admission (10), durant les phases de coupures d'injection de carburant dans la chambre de combustion (3) selon le cycle suivant:
- une phase de début d'échappement correspondant à l'ouverture progressive de la soupape d'échappement (20) et à la remontée du piston (4) qui chasse les gaz brûlés dans le conduit d'échappement (2) et vers le système catalytique en vue de leurs traitements ;
- une phase de fin d'échappement correspondant à la fermeture progressive de la soupape d'échappement (20) et à la remontée du piston (4) qui chasse les gaz brûlés dans le conduit d'échappement (2) et vers le système catalytique en vue de leurs traitements, laissant la place à un nouveau cycle de fonctionnement, du moteur à combustion interne ;
**caractérisé en que** le cycle de fonctionnement comprend également:
- une phase d'admission, correspondant à la déconnexion de la soupape d'admission (10) de façon à ce qu'elle soit en position dite d'obturation du conduit d'admission (1) empêchant ainsi l'admission de gaz frais dans la chambre de combustion (3), et à la descente du piston (4), la soupape d'échappement (20) étant en position d'obturation du conduit d'échappement (2);
- une phase de compression pendant la coupure de l'injection de carburant dans la chambre de combustion (3) correspondant à la remontée du piston (4) qui comprime les gaz présents dans la chambre de combustion (3), la soupape d'échappement (20) étant en position d'obturation du conduit d'échappement (2) et la soupape d'admission (10) étant déconnectée ;
- une de détente pendant la de l'injection du carburant dans la chambre de combustion (3) correspondant à la descente du piston (4) vers sa position minimale ou de point mort bas, la soupape d'échappement (20) étant en position d'obturation du conduit d'échappement (2) et la soupape d'admission (10) étant déconnectée, la combustion n'ayant pas eu lieu puisqu'il n'y a pas eu d'injection de carburant dans la de combustion (3) ;
- une phase de début d'échappement correspondant à l'ouverture progressive de la soupape d'échappement (20) et à la remontée du (4) qui chasse les gaz présents dans la de combustion (3) par le conduit d'échappement (2) et vers le système catalytique en vue de leurs traitements, laissant la place à un nouveau cycle de fonctionnement du moteur à combustion interne.
